Europäisches Patentamt

European Patent Office

Office européen des brevets

(19)

(11) Numéro de publication: **0 309 346**
**A1**

## (12) DEMANDE DE BREVET EUROPEEN

(21) Numéro de dépôt: **88402381.3**

(22) Date de dépôt: **21.09.88**

(51) Int. Cl.4: **F 02 B 77/08**
G 07 C 5/08, G 01 M 15/00

(30) Priorité: **25.09.87 FR 8713320**

(43) Date de publication de la demande:
**29.03.89 Bulletin 89/13**

(84) Etats contractants désignés:
**AT BE DE ES FR GB IT LU**

(71) Demandeur: **APPLICATIONS ELECTRONIQUES TECHNIQUES AVANCEES "A.E.T.A."**
**62 à 70, rue Blanchard**
**F-92363 Fontenay aux Roses (FR)**

(72) Inventeur: **Berthaume, Philippe**
**"Le Grande Chariot" 8, Chemin des Gardes**
**F-91160 Longjumeau (FR)**

**Plat, Dominique**
**51, boulevard de la République**
**F-78000 Versailles (FR)**

**Toret, Alain**
**26, rue de Paris**
**F-783320 Le Pecq (FR)**

(74) Mandataire: **Plaçais, Jean-Yves et al**
**Cabinet Netter 40, rue Vignon**
**F-75009 Paris (FR)**

(54) **Système de surveillance de paramètres d'un véhicule motorisé, notamment du moteur de ce véhicule.**

(57) Le système de surveillance de paramètres selon l'invention est destiné à renseigner sur l'état du véhicule pendant et/ou à l'issue d'au moins une période de fonctionnement du véhicule (1). Ce système comprend, d'une part une unité de détection (2) et une unité d'acquisition de données (3), embarquées sur le véhicule (1), d'autre part une unité de traitement (4). L'unité de détection( 2) mesure des données relatives aux paramètres à surveiller, l'unité d'acquisition (3) acquiert ces données et transmet des informations à l'unité de traitement (4) qui les exploite et les compare à des informations de référence, pour fournir des renseignements sur l'état du véhicule. L'unité d'acquisition (3) acquiert, à des instants datés, un jeu de données relatives au moins à la perte de charge, au niveau d'un filtre, de l'huile du moteur du véhicule de façon que le système soit susceptible de fournir la vitesse d'évolution dans le temps de cette perte de charge, ce qui permet notamment de déterminer le degré de pollution de l'huile du moteur du véhicule.

FIG.1

EP 0 309 346 A1

Bundesdruckerei Berlin

**Description**

**Système de surveillance de paramètres d'un véhicule motorisé, notamment du moteur de ce véhicule.**

La présente invention concerne un système de surveillance de paramètres d'un véhicule motorisé, notamment du moteur de ce véhicule.

Le système de surveillance selon l'invention s'applique aussi bien à des fins de mise au point lors de phases de tests qu'à des fins de maintenance. Il est utilisable pour tout type de véhicule motorisé, notamment ceux qui disposent d'un volume utile réduit, en particulier des véhicules blindés.

Au sens de la présente invention, le terme "véhicule" doit être interprété dans un sens très large. En effet, ce terme englobe non seulement le support motorisé proprement dit, destiné au déplacement, mais aussi des équipements éventuels, que ces équipements soient ou non directement liés à la fonction déplacement. Ainsi, la notion de "l'état du véhicule", évoquée ci-après, peut s'appliquer au véhicule dans son ensemble et/ou à une partie de ses constituants.

On connait des systèmes de surveillance de paramètres, notamment sur des aéronefs. Ces systèmes sont souvent complexes et volumineux et mettent en oeuvre des organes de traitement et de dépouillement importants et souvent encombrants.

Selon le volume disponible dans l'aéronef, on embarque tout ou partie du système de surveillance. Dans le cas où le volume disponible est réduit, on dispose généralement les organes de traitement dans un centre de traitement centralisé fixe sur terre. Les informations collectées lors d'un vol de l'aéronef sont alors envoyées par télémesure vers le centre de traitement ou enregistrées sur une bande magné tique qui sera dépouillée après le vol, dans ce centre.

De tels systèmes sont généralement utilisés lors des essais de mise au point des aéronefs et sont mal adaptés à une maintenance de véhicules. En effet, une maintenance efficace doit pouvoir être prévue, de façon rapide et souple. Or, les systèmes actuels, lorsqu'ils sont fractionnés entre une partie embarquée et une partie à terre ont parfois une inertie non négligeable quant au dépouillement des informations, à cause de leur structure complexe, cette inertie pouvant alors dévoiler un risque de panne trop tardivement. De plus, l'embarquement complet de tout le système de surveillance ne convient pas aux véhicules tels que les blindés ayant un volume utile réduit. Enfin, parfois, seule la surveillance de quelques paramètres serait suffisante pour déterminer l'état de fonctionnement du véhicule, et utiliser des systèmes de surveillance complexes pour ces quelques paramètres n'est pas toujours rentable.

En conséquence, les opérations de maintenance sont souvent déclenchées à partir de critères pas toujours adaptés à la diversité des utilisateurs des véhicules. Ces critères peuvent être par exemple une périodicité calendaire ou un nombre d'heures d'utilisation. Ainsi la maintenance est parfois trop fréquente ou parfois mal adaptée à l'état réel du véhicule, et donc n'est pas efficace.

Enfin tous les véhicules, qui font appel à une lubrification et/ou à un refroidissement par circulation d'un liquide, demandent qu'une attention particulière soit apportée à la propreté de ce liquide car elle témoigne en général de l'état d'usure du véhicule et influe sur sa maintenance.

Pour être informé de la propreté de ce liquide, on peut procéder à l'analyse de ce liquide. Mais cette opération ne peut pas être pratiquée en continu in situ dès lors que l'espace disponible autour du véhicule, et, plus généralement, les conditions d'environnement du véhicule, ne sont pas propices à l'installation de moyens spectrographiques par exemple.

Il est également contraignant de prélever un échantillon de ce liquide pour le transmettre à un laboratoire d'analyse car cette opération peut prendre un certain temps, ce qui risque soit d'immobiliser le véhicule, soit, si ce n'est pas possible, de mettre en évidence trop tard qu'il s'expose à une panne fatale.

Enfin, il existe des tests sur certains paramètres moteurs, mais qui sont orientés sur des moteurs à essence et très mal adaptés pour des moteurs diesel qui généralement équipent un grand nombre de véhicules blindés.

La présente invention remédie à tous ces inconvénients en proposant un système de surveillance, utilisable soit lors de périodes de mise au point, soit comme aide à la gestion de la maintenance.

Un but de l'invention est de permettre un diagnostic rapide, simple et sûr de l'état du véhicule en disposant d'un matériel léger.

Un autre but de l'invention est de doter chaque véhicule susceptible d'être surveillé, d'une "carte d'identité" informatique remise à jour automatiquement après chaque diagnostic, et destinée à remplacer le classique "livret machine".

L'invention a encore pour but de déterminer en continu, in situ, le niveau de pollution de tout liquide, notamment de l'huile circulant au sein du véhicule, en particulier équipé d'un moteur diesel.

Bien que d'autres applications puissent être envisagées, le terme "huile" vise ici essentiellement tout liquide de lubrification d'un moteur à explosion, en particulier diesel, notamment celui destiné à lubrifier les pistons.

La présente invention a donc pour objet un système de surveillance de paramètres d'un véhicule motorisé, notamment du moteur de ce véhicule, ledit système étant destiné à renseigner sur l'état du véhicule pendant et/ou à l'issue d'au moins une période de fonctionnement du véhicule, ledit système comprenant, d'une part une unité de détection et une unité d'acquisition de données, embarquées sur le véhicule, d'autre part une unité de traitement, l'unité de détection mesurant des données relatives aux paramètres à surveiller, l'unité d'acquisition acquérant ces données et transmettant des informations à l'unité de traitement qui les exploite, caractérisé en ce que l'unité de traitement compare lesdites informations à des informations de référence, le résultat de cette comparaison fournissant des renseignements sur l'état du véhicule et en ce que l'unité d'acquisition acquiert, à des instants datés, un jeu de données relatives au moins à la perte de charge, au niveau d'une restriction, d'un liquide circulant au sein du moteur de façon que le système soit susceptible de fournir la vitesse d'évolution dans le temps de cette perte de charge.

De préférence, le liquide est de l'huile, la restriction est un filtre à huile et le jeu de données comprend des mesures de pression, de température et de débit de l'huile au niveau dudit filtre.

Dans un mode de réalisation du système selon l'invention, l'unité de traitement comprend un centre de traitement fixe, séparé du véhicule et l'unité d'acquisition transmet ses informations par voie d'ondes électromagnétiques, pendant la (les) période(s) de fonctionnement du véhicule.

Dans un autre mode de réalisation du système selon l'invention, l'unité de traitement comprend un organe de traitement portatif, séparé du véhicule et susceptible d'être relié à l'unité d'acquisition à l'issue de la (les) période(s) de fonctionnement du véhicule.

Avantageusement, le système comprend en outre une unité de référence propre au véhicule, disposant des informations de référence, l'unité de référence et l'organe de traitement portatif coopérant, à l'issue d'une période de fonctionnement, pour au moins identifier l'unité d'acquisition. Afin d'obtenir un dépouillement plus fin, l'organe de traitement portatif peut être relié, en outre, au centre de traitement fixe.

Très avantageusement, l'organe de traitement portatif effectue, à la fin d'une période de fonctionnement, un diagnostic sommaire de l'état du véhicule en élaborant l'évolution des paramètres à partir des informations transmises par l'unité d'acquisition et des informations de référence relatives au début de la période de fonctionnement, remet éventuellement à jour certaines, au moins, des informations de référence pour l'éventuelle période de fonctionnement suivante et en transmet au moins une partie à l'unité d'acquisition.

De préférence, l'organe de traitement portatif est une valise comprenant des moyens de calcul, des moyens de stockage des informations, des moyens d'interface avec l'unité d'acquisition et le centre de traitement fixe, des moyens de dialogue avec un utilisateur potentiel de la valise.

Avantageusement, l'unité de référence comprend une carte à mémoire coopérant avec un logement de la valise.

De préférence, certaines au moins des informations de référence sont présentes dans l'unité d'acquisition au début de la (des) période(s) de fonctionnement; une partie au moins des informations peuvent être élaborées par un prétraitement sur au moins une partie des données issues de l'unité de détection et l'unité d'acquisition effectue, avantageusement, une présurveillance de certaines de ces informations.

De préférence, l'unité d'acquisition comprend des moyens de traitement, des moyens de mémorisation des données et/ou des informations, alimentés par des moyens d'alimentation autonomes et distincts de ceux de l'unité d'acquisition, des moyens d'interface avec l'unité de traitement et l'unité de détection, et des moyens de datation des données acquises.

Avantageusement, l'unité de détection comprend une pluralité de capteurs permettant l'élaboration d'un jeu essentiel de paramètres reflétant l'état du véhicule.

D'autres avantages et caractéristiques de l'invention apparaîtront à l'examen de la description détaillée ci-après et des dessins annexés sur lesquels :

- la figure 1 est une représentation très schématique d'un premier mode de réalisation du système selon l'invention,

- la figure 2 est une représentation schématique d'un organe de traitement portatif du premier mode de réalisation du système,

- la figure 3 est un synoptique schématique des principaux constituants de l'organe de traitement portatif de la figure 2,

- la figure 4 est un synoptique schématique des principaux constituants d'une unité d'acquisition et d'une unité de. détection du système selon l'invention,

- les figures 5A et 5B illustrent le principe d'évaluation du degré de pollution de l'huile du moteur, et,

- la figure 6 est une représentation très schématique d'un second mode de réalisation du système selon l'invention.

Dans la mesure où ils comportent de nombreux éléments de caractère certain, les dessins annexés font partie intégrante de la description, non seulement pour permettre de mieux faire comprendre celle-ci, mais aussi pour contribuer à la définition de l'invention le cas échéant.

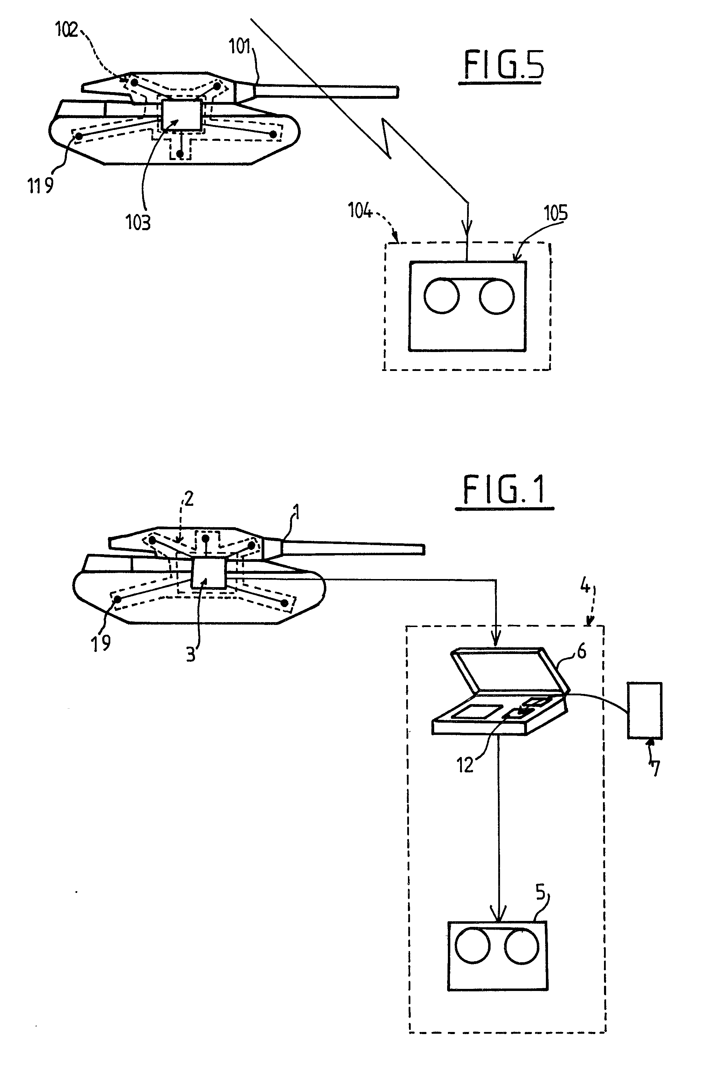

Si l'on se réfère à la figure 1 on voit que l'on a désigné par 1 un véhicule motorisé blindé, muni d'une pluralité de capteurs 19, placés à des endroits à surveiller et constituant une unité de détection 2. Ces capteurs 19 mesurent des données et sont reliés à une unité d'acquisition de données 3. Cette unité d'acquisition 3 acquiert les données mesurées et transmet, à partir de ces données, des informations à une unité de traitement 4.

Cette unité de traitement 4 comprend un organe de traitement portatif 6, constitué d'une valise, et un centre de traitement 5 fixe. La valise est susceptible d'être connectée, à l'issue d'une période de fonctionnement du véhicule blindé, sur l'unité d'acquisition 3 puis éventuellement sur le centre de traitement 5. Avant de connecter la valise 6 sur le véhicule 1, on introduit dans un logement 12 une carte à mémoires 7, propre au véhicule, et dont la fonction sera expliquée ci-après.

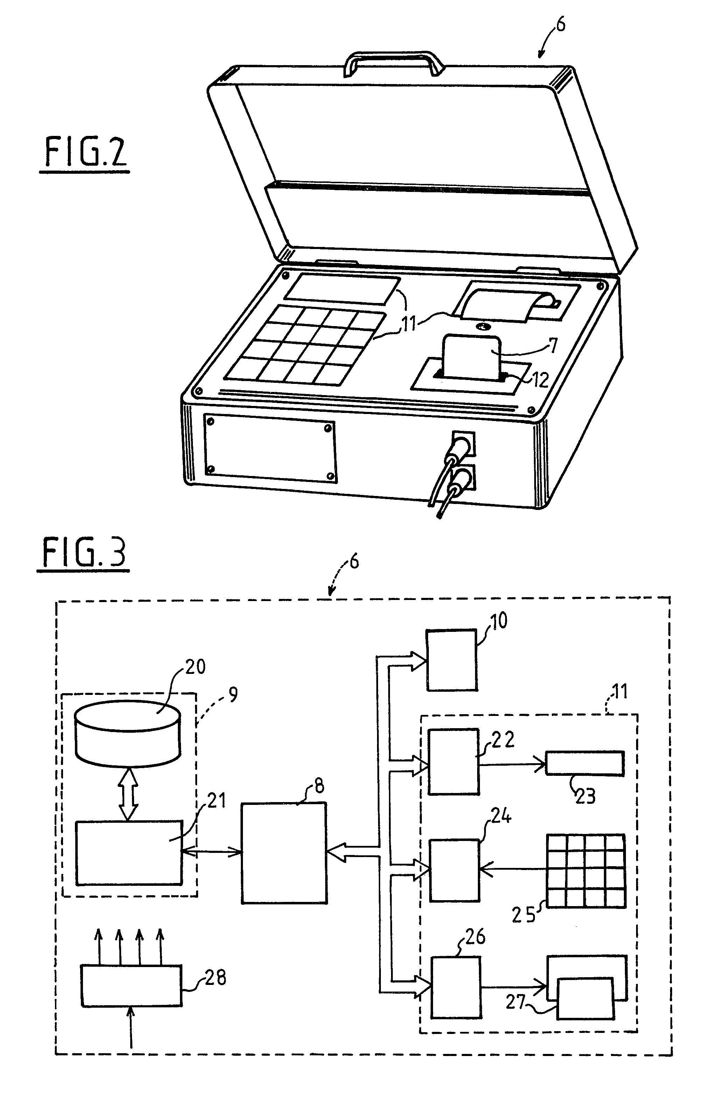

Les figures 2 et 3 montrent de façon plus détaillée la structure de la valise 6 qui comprend, outre le logement 12 pour la carte à mémoire 7, des moyens de dialogue 11 avec un utilisateur. Ces moyens de dialogue comprennent avantageusement, un écran d'affichage 23, un clavier 25, une imprimante 27, et des organes d'interface respectifs 22, 24, 26 avec une carte 8 équipée d'un microprocesseur, constituant des moyens de calcul 8 de la valise 6. Cette valise comprend également les moyens de stockage 9 comportant avantageusement un disque dur 20, pouvant avoir une capacité de 10 mégaoctets et une carte contrôleur de disque 21. Tous les éléments constitutifs de la valise 6 sont alimentés par une alimentation 28. Cette valise étant connectable sur l'unité d'acquisition 3 et/ou sur le centre de traitement fixe 5, elle comprend également des moyens d'interface 10 permettant ces connexions.

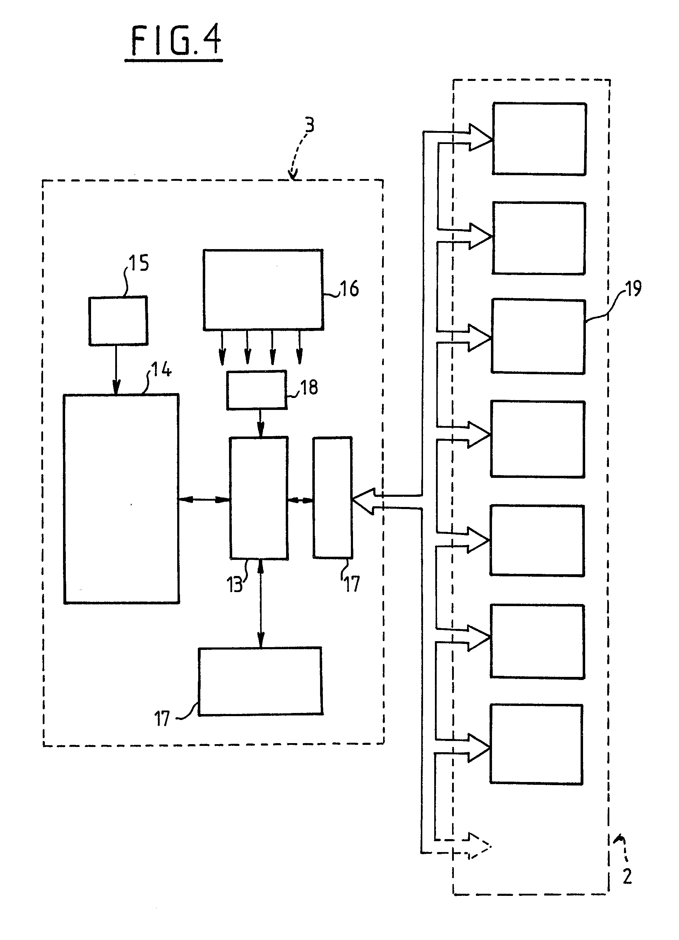

On retrouve, sur la figure 4, une structure pratiquement analogue pour l'unité d'acquisition de données 3. Celle-ci comprend une carte 13 équipée d'un microprocesseur et constituant des moyens de calcul de cette unité. Ces moyens de calcul sont cadencés par une horloge 18 permettant d'effectuer une datation des données émises par l'unité de détection et acquises par l'unité 3. Les moyens de calcul dialoguent avec des moyens de mémorisation 14, constitués d'une carte équipée de mémoires vives, d'une capacité avantageusement égale à 256 kilooctets. En effet, cette capacité de 256 kilooctets permet d'effectuer une surveillance correcte des paramètres du véhicule mais peut être, bien entendu, augmentée si nécessaire. Cette carte 14 est sauvegardée par une batterie 15 distincte des moyens d'alimentation 16 des autres constituants de l'unité d'acquisition 3. Cette dernière comprend, enfin, des moyens d'interface 17 avec l'unité de détection 2 et la valise 6. Les moyens d'interface 17 avec les capteurs 19 de l'unité de détection 2 peuvent être des cartes d'acquisition de données dont le nombre et le type sont adaptés à l'application traitée.

Le système selon l'invention peut comporter un bouton-poussoir, placé par exemple sur le tableau de bord du véhicule à disposition des membres de l'équipage pour signaler manuellement des incidents de fonctionnement, et déclencher une procédure explicitée ci-après.

Les capteurs 19 de l'unité de détection 2 sont de types variés. On peut disposer par exemple de capteurs délivrant un contact sec, ou alimenté du type tout ou rien, de générateurs d'impulsions, de sondes platine-nickel, de thermocouples, de capteurs de pression, de débitmètres, de capteurs délivrant une tension alternative ou à effet piézo-électrique. En tout état de cause, l'unité de détection comprend une pluralité de capteurs permettant l'élaboration d'un jeu essentiel de paramètres reflétant l'état du véhicule 1, notamment spécifiques à la mesure de la perte de charge, au niveau d'une restriction, d'un liquide circulant dans le moteur du véhicule.

Plus particulièrement, on vise à mesurer la perte de charge au niveau d'un filtre de l'huile du moteur. Pour cela on disposera avantageusement en amont et en aval du filtre, des capteurs de pression traditionnels, couramment utilisés pour déterminer le niveau de colmatage des filtres. On accompagne ces capteurs de pression de sondes de température et de capteurs permettant l'évaluation du débit de liquide avec une précision suffisante, tels que des débitmètres rotatifs.

La fonctionnalité de ce système est décrite ci-après. La carte à mémoire 7 contient des informations de référence relatives à l'identité du véhicule 1, à l'identité des principaux constituants de ce véhicule, aux principales caractéristiques techniques à neuf qui serviront de point de repère pendant toute la vie du véhicule et de ses principaux constituants. Cette carte à mémoire joue donc le rôle d'une unité de référence 7 qui peut contenir également des renseignements relatifs aux interventions effectuées sur les entités principales du véhicule avant chaque période de fonctionnement, ainsi qu'aux potentiels consommés par le véhicule et ses principaux constituants. Toutes ces informations de référence sont stockées sur la carte à mémoire 7 selon une procédure qui sera explicitée ci-après et certaines au moins de ces informations de référence, en particulier celles relatives à la configuration de la partie embarquée du système, sont présentes dans l'unité d'acquisition de données 3 au début de chaque période de fonctionnement du véhicule 1.

Pendant une période de fonctionnement, l'unité d'acquisition 3 effectue une surveillance des capteurs 19 en coupures et court-circuit et édite une information d'alerte sur la mémoire 14 si un défaut est constaté. Cette unité 3 effectue également une gestion de la scrutation des capteurs 19 (en général chaque dixième de seconde) et acquiert les données. Elle effectue, de plus, une scrutation simultanée (à plus ou moins un centième de seconde) de certains capteurs délivrant des données devant être acquises à une même date afin de faire l'objet d'un prétraitement spécifique. C'est le cas, par exemple, des données relatives au paramètre particulier de la perte de charge au niveau d'un filtre à huile. Il est en effet nécessaire d'acquérir, simultanément par exemple des données de pression, de débit, et de température.

L'acquisition des données est validée lorsque trois valeurs successives sont cohérentes. Cette règle peut souffrir cependant des exceptions dans le cas particulier des transitoires. Une fois les données acquises, l'unité d'acquisition 3 effectue un traitement des données relatives à certains paramètres afin d'élaborer les informations relatives à ces paramètres qui seront transmises par la suite à l'unité de traitement 4.

Les informations élaborées sont mises en mémoire suivant une fréquence prédéterminée. Certaines de ces informations sont comparées par rapport au seuil significatif d'incidents qui font partie des informations de référence. En cas de dépassement du seuil, l'unité d'acquisition stocke dans la mémoire vive 14 (effaçable seulement par la valise 6) l'ensemble des informations instantanées relatives à tous les paramètres, et, par la suite, la totalité des informations relatives aux paramètres hors normes.

Dans le cas d'une réception par l'unité d'acquisition 3, du signal manuel d'incident provenant du bouton-poussoir, celle-ci stocke dans la mémoire vive 14 l'ensemble des informations relatives à tous les paramètres surveillés.

Ainsi en cas d'incident ou d'anomalie, l'équipe de maintenance dispose donc d'un ensemble de données techniques permettant de comprendre sûrement le déroulement des faits techniques.

A la fin d'une période de fonctionnement du véhicule, et une fois par jour, on connecte la valise 6 sur l'unité d'acquisition 3 après avoir mis en place la carte à mémoire 7 dans le logement 12. En quelques secondes, la valise 6 identifie le véhicule à l'aide des informations de référence présentes sur la carte à mémoire 7, par comparaison avec la configuration présente dans l'unité d'acquisition 3, recopie sur le disque dur 20 la totalité de la mémoire vive 14 de l'unité d'acquisition, puis l'efface et effectue un diagnostic sommaire à partir des informations recueillies et des informations de référence présentes dans l'unité de référence 7.

Ce diagnostic sommaire peut s'effectuer par exemple sur l'écran 23 ou sur l'imprimante 27 et peut se présenter sous la forme de messages du type :
- "véhicule parfaitement opérationnel",
- "liste des capteurs défectueux : ..... ",
- "véhicule à utiliser avec ménagement sur les points suivants : ....... ",
- "véhicule à présenter à la maintenance".

La valise 6, enfin, met à jour les informations de référence pour ce qui concerne les potentiels consommés. Ainsi, toutes ces opérations, près du véhicule, remplacent, en l'automatisant, l'ensemble des contrôles quotidiens actuellement à la charge du personnel de conduite du véhicule.

Chaque valise est ensuite, une fois par jour, connectée au centre de traitement fixe 5 afin d'effectuer un dépouillement fin des informations recueillies. Ces informations sont analysées pour déterminer l'état de la machine, conforter le diagnostic sommaire, proposer un plan prévisionnel de maintenance à partir des observations sous charge, en grandeur réelle (édition d'un planigramme optimal d'entretien qui garantit la disponibilité maximale du parc de véhicules). La liste des informations liées à la maintenance préventive est éditée automatiquement à partir des informations recueillies. A l'issue de ces opérations de maintenance préventive, l'unité de référence 7 est de nouveau mise à jour. Ainsi celle-ci permet une mémorisation du taux de vieillissement réel de la machine de ses constituants. Dans le cas où la configuration de l'unité d'acquisition 3 est modifiée, celle-ci, présente sur l'unité de référence 7, est transmise à l'unité d'acquisition 3 par la valise 6 munie de l'unité de référence 7.

Ainsi l'unité de référence 7 constitue une véritable "carte d'identité" informatique pour le véhicule et remplace le classique livret machine tenu à jour manuellement.

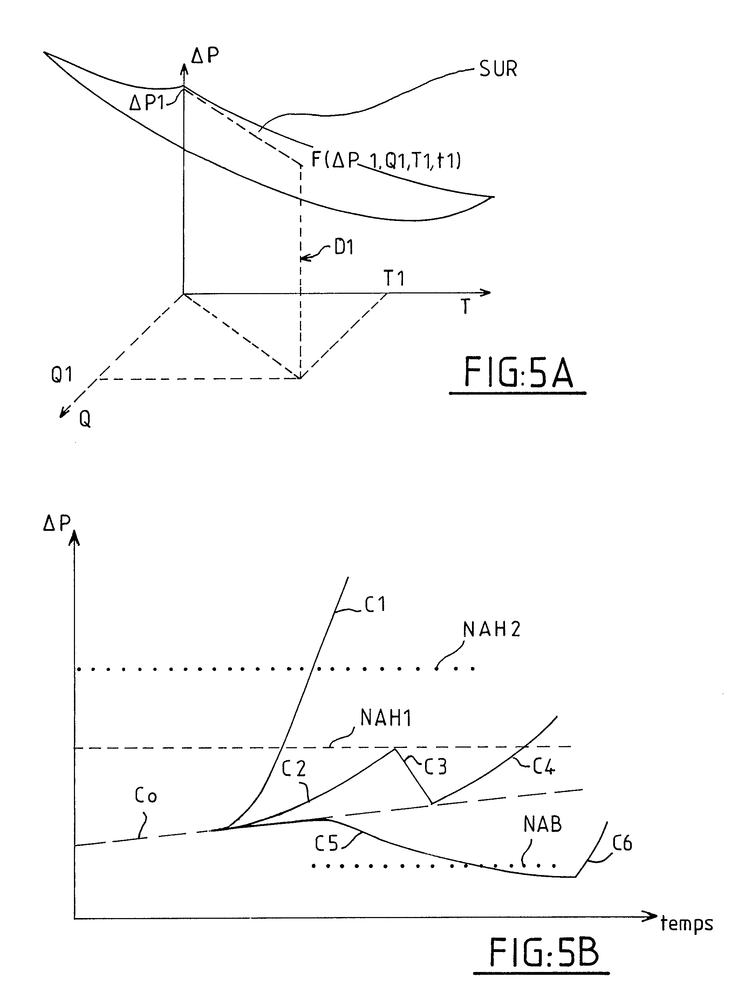

On va maintenant décrire les principes de la mesure du paramètre particulier de la perte de charge au niveau d'un filtre à huile, en se référant aux figures 5A et 5B.

Lorsque de l'huile est chargée d'impuretés, ces impuretés sont arrêtées par le filtre et la perte de charge au niveau du filtre dépend :
- du débit Q de l'huile,
- du volume d'impuretés déjà arrêtées par le filtre,
- de la viscosité (fonction de la température T) de l'huile.

Au cours d'essais, la Demanderesse a constaté de façon inattendue et surprenante que, pour un débit et une température donnés, la vitesse d'évolution de la perte de charge au niveau du filtre est représentative du niveau de pollution de l'huile.

Pour arriver à cette conclusion, la Demanderesse a tout d'abord constaté que la mesure de la valeur de la perte de charge $\Delta P$ (pression en amont du filtre - pression en aval du filtre) devait s'accompagner, au même instant t, de la mesure du débit Q et de la température T de l'huile au niveau du filtre.

En effet, à température constante, et à taux d'encrassement de l'huile constant, on observe une augmentation de la perte de charge $\Delta P$ lors d'une augmentation du débit Q.

Par contre, à débit constant, on observe pour une huile encrassée, une diminution de la perte de charge $\Delta P$ lors d'une augmentation de la température.

Par conséquent, si l'on se contente de mesurer la vitesse d'évolution de la perte de charge P en fonction du temps sans tenir compte du débit et de la température, ou en ne tenant compte que d'un seul de ces deux paramètres, on peut obtenir, du fait des effets antagonistes décrits ci-dessus, une évolution de la perte de charge laissant penser que l'huile n'est pas encrassée alors que c'est le cas. Il est donc nécessaire d'effectuer à la même date la mesure des trois paramètres $\Delta P$, Q, T. Néanmoins, le paramètre essentiel influençant la variation de la perte de charge est le débit, pour autant qu'on se situe dans une plage de température normale.

Lors de cette mesure, par exemple à l'instant tl, on obtient un point de fonctionnement F ($\Delta P1$, Q1, T1, t1). Lorsque le débit et la température varient, le point de fonctionnement F se déplace sur la surface SUR et celle-ci varie elle-même en fonction du temps t.

Pour un débit Q1 et une température T1 choisis, la droite D1 coupe la surface SUR au point F ($\Delta P1$, t1). Lorsque le temps varie, la perte de charge $\Delta P$ se situe alors sur l'une des courbes C0-C6 de la figure 5B.

La Courbe C0 illustre une évolution normale de la perte de charge $\Delta P$.

La courbe C1 illustre le cas d'un encrassement du filtre. On remarque sur cette courbe que, à partir du moment où l'huile s'encrasse, la vitesse d'évolution de la perte de charge (c'est-à-dire la dérivée temporelle de la perte de charge ou encore la tangente en un point de la courbe) est élevée.

Les courbes C2 et C4 illustrent le cas d'une dégradation de l'huile (matières charbonneuses). On remarque sur ces deux courbes que leur pente, représentative de la vitesse d'évolution de la perte de charge, est modérée par rapport à celle de la courbe C1.

La courbe C3 illustre un appoint d'huile dans un circuit pollué ce qui se traduit par une pente négative importante succédant à la pente positive modérée de la courbe C2.

La courbe C5 illustre le cas d'une huile diluée par du carburant, par exemple, ou bien ayant subi une dégradation de sa viscosité. La pente de cette courbe est négative et faible.

Lorsque l'appoint d'huile est effectué, la perte de charge évolue alors sur la courbe C6 qui présente une forte pente positive.

On définit sur ce graphique trois seuils d'alerte représentatifs d'une pollution de l'huile.

Le seuil NAH1 représente celui au-delà duquel il convient de faire l'appoint d'huile. Le seuil NAH2 définit le niveau d'encrassement maximum admissible et le seuil NAB définit celui au-delà duquel il convient de faire l'appoint d'huile dans un circuit dilué.

Une simple comparaison de la perte de charge ΔP par rapport aux différents seuils peut conduire à une erreur d'interprétation. En effet si la valeur de Δp se situe entre le seuil NAH1 et NAH2 sur le prolongement de la courbe C2, il convient alors d'opérer un appoint d'huile. Par contre si cette valeur se situe sur la courbe C1, la maintenance du véhicule n'est pas encore à envisager. L'homme de l'art comprendra alors aisément que seule la détermination de la pente, c'est-à-dire la vitesse d'évolution de la perte de charge, permet de distinguer les deux cas évoqués ci-dessus.

Préalablement aux mesures proprement dites, le système a été étalonné. Pour ce faire, on a déterminé la perte de charge sur le filtre pour plusieurs valeurs de température d'huile et de débit donnés. On obtient alors un ensemble de valeurs de référence pour la perte de charge et sa dérivée temporelle qui aideront à l'établissement du diagnostic. Au cours d'une période de fonctionnement du véhicule, l'unité d'acquisition 3 acquiert des données de température, de débit, de pression et met en mémoire ces résultats à chaque fois que les conditions de mesure correspondent à une configuration étalonnée (température, débit), à une plage d'incertitudes près. Les informations sont datées grâce à l'horloge 18 de l'unité d'acquisition 3. On analyse les informations sur une période pouvant aller de quelques minutes à quelques heures pour déterminer la vitesse d'évolution de la perte de charge.

Au moment du dépouillement, on compare la vitesse calculée avec une vitesse de référence, propre à chaque véhicule.

Il faut noter que, le plus souvent, la vitesse de l'évolution de la perte de charge du filtre est lente, même lorsque le filtre est pollué. Ce phénomène impose de suivre l'évolution de la perte de charge sur des périodes longues pouvant atteindre plusieurs heures. Ces contraintes imposent donc des capacités de mémoire et de traitement importantes, difficilement compatibles avec l'espacement réduit d'un véhicule blindé, et qui peuvent être obtenues de façon souple par le système de surveillance selon l'invention.

Le système de surveillance selon l'invention propose donc un capteur de pollution d'un liquide basé notamment sur la vitesse de colmatage d'un filtre (et donc sur la vitesse d'évolution de la perte de charge) et non exclusivement sur la simple valeur de la perte de charge à un instant donné (état de colmatage).

Si l'on se réfère à la figure 6, on voit que l'on a représenté un second mode de réalisation du système de surveillance selon l'invention, dans lequel les éléments identiques au premier mode de réalisation portent des références augmentées de 100. On ne décrira ci-après que les différences entre ces deux modes de réalisation.

Dans ce second mode de réalisation il n'est pas prévu d'organe de traitement portatif ni d'unité de référence. Par contre, le véhicule 101 est équipé d'un matériel d'émission de télémesure, non représenté sur la figure 6, et l'unité de traitement 104 comprend un matériel de réception de télémesure, non représenté sur la figure 6.

Les informations, élaborées par l'unité d'acquisition de données 103 à partir des données des capteurs 119, sont alors envoyées, par voie d'ondes électromagnétiques, au cours d'une période de fonctionnement du véhicule 101, vers l'unité de traitement 104, et donc vers le centre de traitement fixe 105. Celui-ci les exploite et les compare avec les informations de référence propres au véhicule, stockées directement dans l'espace mémoire du centre de traitement 105.

Ce second mode de réalisation est particulièrement adapté pour permettre le suivi de véhicules en cours d'essais, car il est alors nécessaire de connaître les résultats de mesure en temps réel. Cependant, ceci n'est pas restrictif et l'on pourrait concevoir une politique de gestion de maintenance n'utilisant pas l'intermédiaire d'un organe de traitement portatif.

L'invention peut comporter des variantes, notamment la suivante :

- l'unité de traitement peut être embarquée dans le véhicule si le volume disponible le permet. Dans ce cas, l'affichage du niveau de pollution de l'huile pourrait s'effectuer directement sur le tableau de bord.

## Revendications

1. Système de surveillance de paramètres d'un véhicule motorisé (1;101), notamment du moteur de ce véhicule, ledit système étant destiné à renseigner sur l'état du véhicule pendant et/ou à l'issue d'au moins une période de fonctionnement du véhicule (1;101), ledit système comprenant, d'une part une unité de détection (2;102) et une unité d'acquisition de données (3;103), embarquées sur le véhicule (1;101), d'autre part une unité de traitement (4;104), l'unité de détection (2;102) mesurant des données relatives aux paramètres à surveiller, l'unité d'acquisition (3;103) acquérant ces données et transmettant des informations à l'unité de traitement (4;104) qui les exploite, caractérisé en ce que l'unité de traitement compare lesdites informations à des informations de référence, le résultat de cette comparaison fournissant des renseignements sur l'état du véhicule et en ce que l'unité d'acquisition (3;103) acquiert, à des instants datés, un jeu de données relatives au moins à la perte de charge, au niveau d'une restriction, d'un liquide circulant au sein du moteur de façon que le système soit susceptible de fournir la vitesse d'évolution dans le temps de cette perte de charge.

2. Système selon la revendication 1, caractérisé en ce que le liquide est de l'huile, en ce que la restriction est un filtre à huile et en ce que le jeu de données comprend des mesures de pression, de température et de débit de l'huile au niveau dudit filtre.

3. Système selon la revendication 1 ou 2, caractérisé en ce que l'unité de traitement (104) comprend un centre de traitement fixe (105), séparé du véhicule (101) et en ce que l'unité d'acquisition (103) transmet ses informations par voie d'ondes électromagnétiques, pendant la (les) période(s) de fonctionnement du véhicule.

4. Système selon la revendication 1 ou 2, caractérisé en ce que l'unité de traitement (4) comprend un organe de traitement portatif (6), séparé du véhicule (1), et susceptible d'être relié à l'unité d'acquisition (3) à l'issue de la (les) période(s) de fonctionnement du véhicule.

5. Système selon la revendication 4, caractérisé en ce qu'il comprend en outre une unité de référence (7) propre au véhicule (1), disposant des informations de référence, l'unité de référence (7) et l'organe de traitement portatif (6) coopérant, à l'issue d'une période de fonctionnement, pour au moins identifier l'unité d'acquisition (3).

6. Système selon la revendication 3 prise en combinaison avec l'une des revendications 4 et 5, caractérisé en ce que l'organe de traitement portatif (6) est susceptible d'être relié, en outre, au centre de traitement fixe (5).

7. Système selon l'une des revendications 4 à 6, caractérisé en ce que l'organe de traitement portatif (6) effectue, à la fin d'une période de fonctionnement, un diagnostic sommaire de l'état du véhicule (1) en élaborant l'évolution des paramètres à partir des informations transmises par l'unité d'acquisition (3) et des informations de référence relatives au début de la période de fonctionnement, remet éventuellement à jour certaines, au moins, des informations de référence pour l'éventuelle période de fonctionnement suivante et en transmet au moins une partie à l'unité d'acquisition (3).

8. Système selon l'une des revendications 4 à 7, caractérisé en ce que l'organe de traitement portatif est une valise

(6) comprenant des moyens de calcul (8), des moyens de stockage (9) des informations, des moyens d'interface (10) avec l'unité d'acquisition (3) et le centre de traitement fixe (5), des moyens de dialogue (11) avec un utilisateur potentiel de la valise (6).

9. Système selon les revendications 5 et 8, caractérisé en ce que l'unité de référence comprend une carte à mémoire (7) coopérant avec un logement (12) de la valise (6).

10. Système selon l'une des revendications précédentes, caractérisé en ce que certaines, au moins, des informations de référence sont présentes dans l'unité d'acquisition (3;103) au début de la (des) période(s) de fonctionnement, en ce qu'une partie au moins des informations sont élaborées par un prétraitement sur au moins une partie des données issues de l'unité de détection (2;102) et en ce que l'unité d'acquisition (3;103) effectue une présurveillance de certaines de ces informations.

11. Système selon l'une des revendications précédentes, caractérisé en ce que l'unité d'acquisition (3;103) comprend des moyens de traitement (13), des moyens de mémorisation (14) des données et/ou des informations, alimentés par des moyens d'alimentation (15) autonomes et distincts de ceux (16) de l'unité d'acquisition (3), des moyens d'interface (17) avec l'unité de traitement (4) et l'unité de détection (2), et des moyens de datation (18) des données acquises.

12. Système selon l'une des revendications précédentes, caractérisé en ce que l'unité de détection (2; 102) comprend une pluralité de capteurs (19;119) permettant l'élaboration d'un jeu essentiel de paramètres reflétant l'état du véhicule (1;101).

FIG.5

FIG.1

FIG.2

FIG.3

# FIG.4

FIG:5A

FIG:5B

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 071 523 (SOURIAU & CIE S.A.) <br> * Figures 1,2; pages 1-17 * <br> --- | 1 | F 02 B 77/08 <br> G 07 C 5/08 <br> G 01 M 15/00 |
| A | US-A-4 602 127 (NEELY et al.) <br> * Résumé; figure 1 * <br> --- | 1,3,4,6 ,7,11, 12 | |
| P,A | EP-A-0 241 781 (S.E.M.T.) <br> * Page 4, lignes 17-20 * <br> --- | 1 | |
| A | EP-A-0 111 821 (BMW) <br> * Résumé; page 2, lignes 7-24; page 3a, lignes 5-15; page 5a, lignes 17-25; page 6, lignes 22-26; figures * <br> --- | 1,2 | |
| A | US-A-4 518 268 (SWIS) <br> * Résumé; figure 1 * <br> --- | 8 | |
| A | US-A-3 935 427 (GEUL) <br> --- | | |
| A | US-A-3 792 445 (BUCKS) <br> --- | | DOMAINES TECHNIQUES RECHERCHES (Int. Cl.4) |
| A | DE-A-3 221 399 (KIENZLE APPARATE GmbH) <br> --- | | F 02 B <br> G 07 C <br> G 01 M |
| A | DE-A-3 221 398 (KIENZLE APPARATE GmbH) <br> --- | | |
| A | PATENT ABSTRACTS OF JAPAN, vol. 7, no. 23 (P-171)[1168], 29 janvier 1983, page 7 P 171; & JP-A-57 175 241 (KIYATAPIRAA MITSUBISHI K.K.) 28-10-1982 <br> --- | | |
| A | PATENT ABSTRACTS OF JAPAN, vol. 8, no. 100 (M-295)[1537], 11 mai 1984, page 143 M 295; & JP-A-59 14 540 (NISSAN JIDOSHA K.K.) 25-01-1984 <br> ----- | | |

Le présent rapport a été établi pour toutes les revendications

| Lieu de la recherche | Date d'achèvement de la recherche | Examinateur |
|---|---|---|
| LA HAYE | 04-11-1988 | THIBO F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)